# EUROPEAN PATENT APPLICATION

(11) **EP 4 588 770 A1**
(43) Date of publication of application: **23.07.2025**
(21) Application number: 24166299.8
(22) Date of filing: 26.03.2024
(51) Int. Cl.: B62K 15/00, B62K 5/003, B62K 3/00, B62K 5/08, B62K 5/00, B62J 25/04, B62J 43/16

(54) **FOLDABLE SCOOTER**

(30) Priority: 16.01.2024 CN 202420107717 U
(71) Applicant: Intradin (Shanghai) Machinery Co., Ltd., Shanghai 201109 (CN)
(72) Inventor: LI, Ping, Shanghai City, 201109 (CN); QIAO, Xuetao, Shanghai City, 201109 (CN); ZHOU, Yonggang, Shanghai City, 201109 (CN)
(74) Representative: Vitina, Maruta

(57) **Abstract**

A foldable scooter includes a handle assembly, a bearing assembly, a support assembly, a seat, a clamp assembly, and a locking assembly. The support assembly is articulated with the bearing assembly, such that it can be rotated relative to the support assembly to fold or unfold the scooter. The seat is removably provided on the support assembly. The clamp assembly is spacedly provided with a first groove and a second groove. The locking assembly is rotatably provided on the bearing assembly, and can be clamped in the first groove or the second groove to realize the locking of the scooter in an unfolded or folded state.

## Description

### TECHNICAL FIELD

This application relates to scooters, and more particularly to a foldable scooter.

### BACKGROUND

Scooters are designed to help those suffering from obesity, disabilities and mobility problems do outdoor activities (e.g., camping) more conveniently. Sometimes, it is necessary to fold the scooter to facilitate the transportation.

However, the existing scooters have a complex folding structure, and the folding process is time-consuming. Moreover, the folded scooter still has a relatively large thickness, which results in large space occupation and inconvenient storage and transportation.

### SUMMARY

In view of the above problems, an object of this application is to provide a foldable scooter which can be quickly folded and has less space occupation.

In order to arrive at the above purpose, the present disclosure provides a foldable scooter, comprising:
a handle assembly;
a bearing assembly;
a support assembly;
a seat;
a clamp assembly; and
a locking assembly;
wherein the handle assembly is provided on the bearing assembly; the support assembly is articulated with the bearing assembly, and the bearing assembly is configured to be rotatable relative to the support assembly to fold or unfold the scooter; the seat is removably provided on the support assembly; the clamp assembly is provided on the support assembly, and is provided with an first groove and a second groove spaced from the first groove; the locking assembly is rotatably provided on the bearing assembly, and the locking assembly is configured to rotate relative to the bearing assembly to be clamped in the first groove, so as to realize locking of the scooter in an unfolded state; and the locking assembly is also configured to rotate together with the bearing assembly relative to the support assembly, so that the locking assembly is be clamped in the second groove to realize locking of the scooter in a folded state.

In an embodiment, the locking assembly comprises a connecting plate, a first articulated shaft and a clamp shaft; the first articulated shaft and the clamp shaft are provided spaced apart on the connecting plate; the first articulated shaft is rotatably provided on the bearing assembly; the clamp shaft and the connecting plate are configured to rotate around the first articulated shaft relative to the bearing assembly, so as to allow the clamp shaft to be clamped in the first groove; and the locking assembly is configured to rotate together with the bearing assembly relative to the support assembly, so as to allow the clamp shaft to be clamped in the second groove.

In an embodiment, the locking assembly further comprises a push-pull shaft; the push-pull shaft is provided on the connecting plate, and is spaced from the clamp shaft; and the push-pull shaft is located on a side of the clamp shaft away from the first articulated shaft.

In an embodiment, the scooter further comprises a second articulated shaft; the support assembly is articulated with the bearing assembly through the second articulated shaft; the locking assembly further comprises a tension spring; a first end of the tension spring is connected to the clamp shaft, and a second end of the tension spring is connected to the second articulated shaft; the tension spring is configured to have a pretension force to apply a pulling force to the clamp shaft when clamped in the first groove or the second groove, so as to prevent the clamp shaft from being disengaged from the first groove or the second groove.

In an embodiment, the bearing assembly comprises a bearing pipe, a first connecting rod, a second connecting rod, a first front wheel and a second front wheel; the first connecting rod is arranged on a first side of the bearing pipe, and the second connecting rod is arranged on a second side of the bearing pipe; the first front wheel is rotatably provided on the first connecting rod, and the second front wheel is rotatably provided on the second connecting rod; the bearing assembly further comprises a first articulated plate and a second articulated plate; the first articulated plate and the second articulated plate are fixedly connected to the bearing pipe; and the first articulated plate and the second articulated plate are articulated with the support assembly.

In an embodiment, the bearing assembly further comprises a first mounting frame, a second mounting frame, a first spring shock absorber, and a second shock absorber; the first mounting frame is fixedly provided on the first side of the bearing pipe, and the second mounting frame is fixedly provided on the second side of the bearing pipe; an end of the first connecting rod away from the first front wheel is rotatably connected with the first mounting frame, and an end of the second connecting rod away from the second front wheel is rotatably connected with the second mounting frame; the first spring shock absorber is provided between the first connecting rod and the first mounting frame, and the second spring shock absorber is provided between the second connecting rod and the second mounting frame; the first spring shock absorber is configured to absorb shock of the first front wheel, and the second spring shock absorber is configured to absorb shock of the second front wheel.

In an embodiment, the first spring shock absorber comprises a damping spring, a telescopic rod, a top base and a bottom base; the top base is rotatably provided on the first mounting frame; the bottom base is rotatably provided on the first connecting rod; a first end of the telescopic rod is connected to the top base, and a second end of the telescopic rod is configured to extend into the bottom base; the telescopic rod is configured to move along its own axis to realize extension and retraction relative to the bottom base; the damping spring is sleevedly provided outside the telescopic rod; a first end of the damping spring is connected to the top base, and a second end of the damping spring is connected to the bottom base; a rotation axis between the first connecting rod and the first mounting frame is parallel to a horizontal direction.

In an embodiment, the scooter further comprises a support plate; the support plate is provided below the first articulated plate, the second articulated plate and the support assembly, so as to limit downward rotation of the bearing assembly relative to the support assembly.

In an embodiment, the support assembly comprises a support rod, a pedal and a first vertical column; the pedal and the first vertical column are provided spaced apart on the support rod; the seat is removably provided on the first vertical column; the support rod is articulated with the bearing assembly, and the bearing assembly is configured to rotate relative to the support assembly, so as to fold or unfold the scooter; and the clamp assembly is provided on the support rod.

In an embodiment, a number of the clamp assembly is equal to a number of the support rod; the clamp assembly is in one-to-one correspondence with the support rod; and the number of the support rod is two.

In an embodiment, the support assembly further comprises a mounting part, a first rear wheel and a second rear wheel; the first rear wheel is rotatably provided on a first end of the mounting part, and the second rear wheel is rotatably provided on a second end of the mounting part.

In an embodiment, the scooter further comprises a drive part; the drive part is connected to the first rear wheel; a number of the drive part is one, and the drive part is configured to only drive the first rear wheel to rotate.

In an embodiment, the handle assembly comprises a telescopic assembly and a handle; the telescopic assembly is provided on the bearing assembly; the handle is provided on the telescopic assembly; and the telescopic assembly is configured to be extendable and retractable along its own axis, so as to adjust a height of the handle.

The present disclosure has beneficial effects as follows. When the foldable scooter of the present disclosure is needed to be folded, the seat is removed first, and the handle assembly and the bearing assembly are driven together to rotate relative to the support assembly, that is, the handle assembly is folded upward, so as to realize folding of the handle assembly and the bearing assembly relative to the support assembly. On the one hand, the seat of this application is removed in advanced. On the other hand, the handle assembly and the bearing assembly supporting the handle assembly are configured to rotate relative to the support assembly rather than folding from a middle of the scooter in this application. In this way, after folding the foldable scooter, a height of the scooter is greatly decreased, so that the folded scooter is flatter and occupies less space, which is more convenient for storage and transportation. In addition, this application provides the clamp assembly and the locking assembly, so that when folding the scooter, it is only needed to rotate the handle assembly together with the bearing assembly relative to the support assembly, and clamp the locking assembly on the second groove of the clamp assembly to complete a folding process, which folds conveniently and fast and has an easy folding structure and folding process.

### BRIEF DESCRIPTION OF THE DRAWINGS

To facilitate the understanding of technical solutions of embodiments of the present disclosure or the prior art, accompanying drawings needed in the description of embodiments or the prior art will be briefly introduced below. It is obvious that presented in the accompanying drawings are only some embodiments of the present disclosure, and those skilled in the art can obtain other drawings according to these accompanying drawings without any creative effort.
Fig. 1 schematically shows a structure of a foldable scooter according to an embodiment of the present disclosure in an unfolded state;
Fig. 2 schematically shows a part of the structure of the scooter according to an embodiment of the present disclosure in a folded state;
Fig. 3 is an enlarged view of portion "A" in Fig. 2;
Fig. 4 is a bottom view of the scooter according to an embodiment of the present disclosure in the folded state;
Fig. 5 is an enlarged view of portion "B" in Fig. 4;
Fig. 6 schematically shows coordination of a clamp assembly and a locking assembly according to an embodiment of the present disclosure;
Fig. 7 schematically shows the structure of the scooter according to an embodiment of the present disclosure from another angle of view when unfolded;
Fig. 8 schematically shows a structure of a bearing assembly according to an embodiment of the present disclosure;
Fig. 9 schematically shows the structure of the scooter according to an embodiment of the present disclosure from another angle of view when unfolded;
Fig. 10 is an enlarged view of portion "B" in Fig. 4;
Fig. 11 schematically shows a structure of a locking part according to an embodiment of the present disclosure; and
Fig. 12 schematically shows the structure of the scooter according to an embodiment of the present disclosure after folded.

In the figures: 100, handle assembly; 110, telescopic assembly; 111, first connecting pipe; 112, second connecting pipe; 113, second fastening part; 120, handle; 200, bearing assembly; 210, bearing pipe; 220, first connecting rod; 230, second connecting rod; 240, first front wheel; 250, second front wheel; 260, first articulated plate; 261, auxiliary groove; 270, second articulated plate; 280, first mounting frame; 290, second mounting frame; 2110, first spring shock absorber; 2111, damping spring; 2112, telescopic rod; 2113, top base; 2114, bottom base; 2120, second spring shock absorber; 2130, first fender; 2140, second fender; 300, support assembly; 310, support rod; 320, pedal; 330, first vertical column; 331, locking hole; 340, mounting part; 350, first rear wheel; 360, second rear wheel; 370, locking part; 371, pin shaft; 372, U-type safety buckle; 380, first fastening part; 400, seat; 410; seat base; 420, seat back; 430, second vertical column; 431, adjusting hole; 500, clamp assembly; 510, first groove; 520, second groove; 600, locking assembly; 610, connecting plate; 620, first articulated shaft; 630, clamp shaft; 640, push-pull shaft; 650, tension spring; 700, second articulated shaft; 800, support plate; 900, drive part; and 1000, lithium battery.

### DETAILED DESCRIPTION OF EMBODIMENTS

The present disclosure will be clearly and completely described below with reference to the accompanying drawings in embodiments. It is obvious that the embodiments described herein are only part of embodiments of the present disclosure rather than all embodiments. And any other embodiments made by those skilled in the art based on the embodiments of the present disclosure without creative effort shall fall within the scope of the present disclosure.

It should be noted that the terms, such as "up", "down", "left", "right", "front", "rear" and other directional indications used herein, are only for illustrating relative position relationship and motion between components in a specific state (as shown in accompanying drawings). If the specific state changes, the directional indication accordingly changes. In addition, the terms "first" and "second" are only used for distinguishment rather than indicating or implying relative importance and number of technical features. Therefore, a feature defined with "first" or "second" may explicitly or implicitly indicates the inclusion of at least one of such feature. Besides, the term "and/or" used herein includes three schemes, for example, "A" and/or "B" includes solution "A", solution "B", and a combination thereof. Technical solutions of embodiments can be combined with each other as long as the combined solution can be implemented by those skilled in the art. When a combination of the technical solutions is contradictory or cannot be realized, it should be considered that such combination of the technical schemes does not exist and is not within the scope of the present disclosure.

Specific structure of a conveniently foldable scooter of the present disclosure will be described as follows.

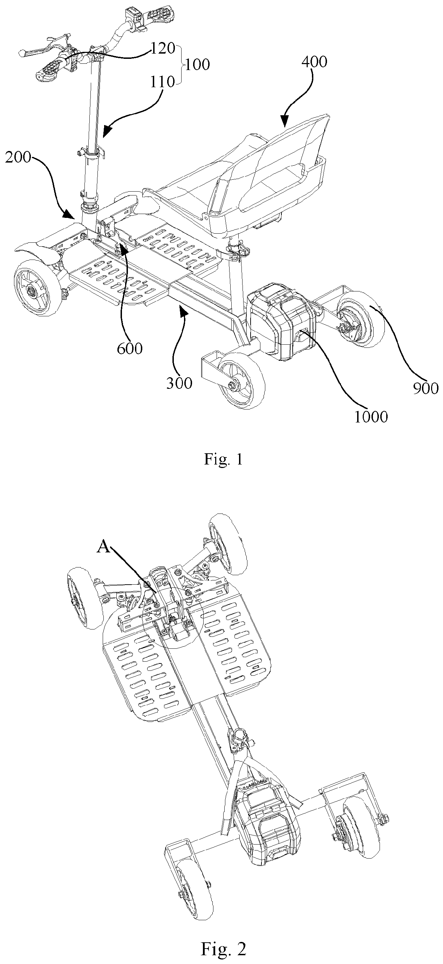

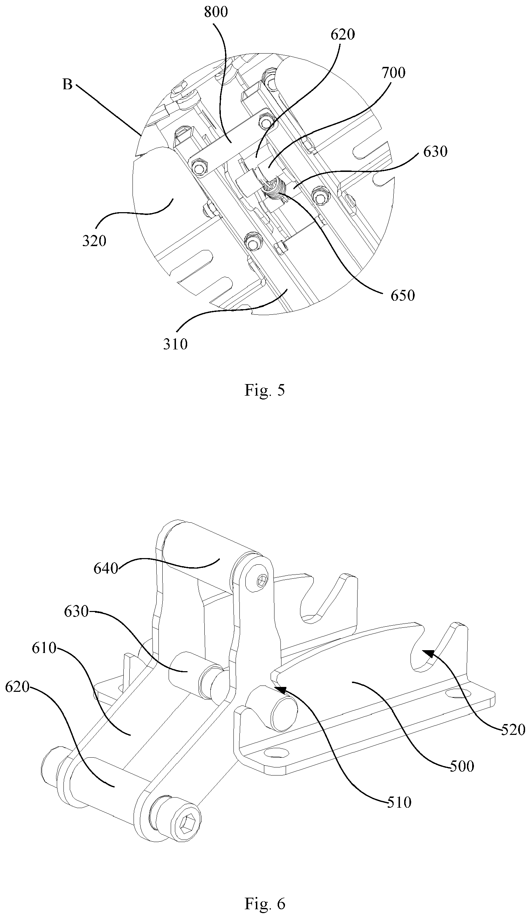

Referring to Figs. 1-5, the scooter includes a handle assembly 100, a bearing assembly 200, a support assembly 300, a seat 400, a clamp assembly 500, and a locking assembly 600. The handle assembly 100 is provided on the bearing assembly 200. The support assembly 300 is articulated with the bearing assembly 200. The bearing assembly 200 is configured to be rotatable relative to the bearing assembly to fold or unfold the scooter. The seat 400 is removably provided on the support assembly 300. The clamp assembly 500 is provided on the support assembly 300, and is provided with a first groove 510 and a second groove 520 spaced from the first groove. The locking assembly 600 is rotatably provided on the bearing assembly 200, and the locking assembly 600 is configured to rotate relative to the bearing assembly 200 to be clamped in the first groove 510, so as to realize locking of the scooter in an unfolded state. And the locking assembly 600 is also configured to rotate together with the bearing assembly 200 relative to the support assembly 300 so that the locking assembly 600 is clamped in the second groove 520 to realize locking of the scooter in a folded state.

When the foldable scooter of the present disclosure is needed to be folded, the seat 400 is removed first, and the handle assembly 100 together with the bearing assembly 200 are driven to rotate relative to the support assembly 300, that is, the handle assembly 100 is folded upward, so as to realize folding of the handle assembly 100 and the bearing assembly 200 relative to the support assembly 300. On one hand, the seat 400 is removed in advanced. On the other hand, the handle assembly 100 and the bearing assembly 200 supporting the handle assembly 100 are configured to be rotatable relative to the support assembly 300 rather than folding from a middle of the support assembly 300. In this way, after folding the foldable scooter, the support assembly 300 is still flat, and only the handle assembly 100 and the bearing assembly 200 are folded, so that the folded scooter is flatter and occupies less space, and a height of the scooter is relatively low, which facilitates storage or transportation for the scooter. In addition, this application provides the clamp assembly 500 and the locking assembly 600, so that when folding the foldable scooter, it is needed to only rotate the handle assembly 100 together with the bearing assembly 200 relative to the support assembly 300, so as to allow the locking assembly 600 to be clamped in the second groove 520 of the clamp assembly 500 to complete a folding process, which folds conveniently and fast, and has an easy folding structure and folding process.

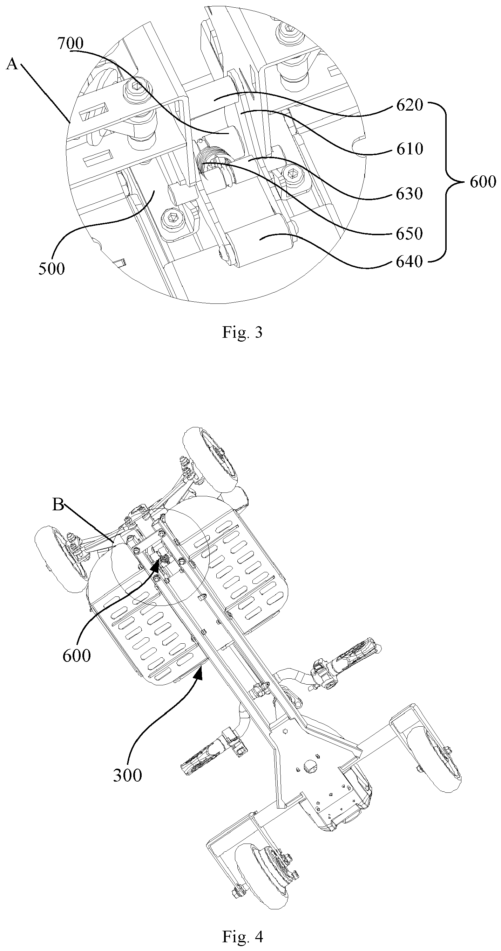

Referring to Figs. 3, 5 and 6, the locking assembly 600 includes a connecting plate 610, a first articulated shaft 620 and a clamp shaft 630. The first articulated shaft 620 and the clamp shaft 630 are provided spaced apart on the connecting plate 610. The first articulated shaft 620 is rotatably provided on the bearing assembly 200. The clamp shaft 630 and the connecting plate 610 are configured to rotate around the first articulated shaft 620 relative to the bearing assembly 200, so as to allow the clamp shaft 630 to be clamped in the first groove 510 when the scooter is unfolded. And the locking assembly 600 together with the bearing assembly 200 are configured to rotated relative to the support assembly 300, so as to allow the clamp shaft 630 to be clamped in the second groove 520 when the scooter is folded.

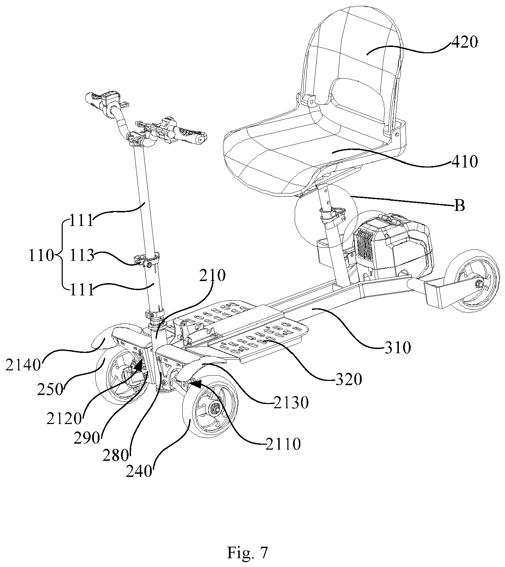

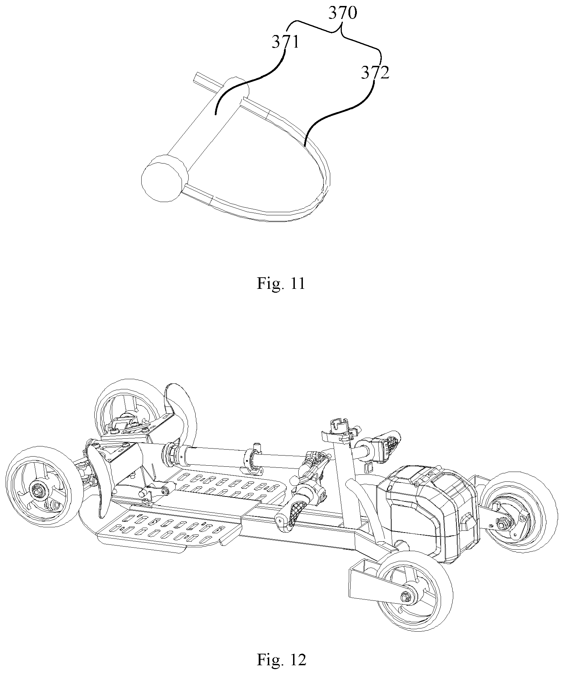

In an embodiment, when the scooter is needed to be folded, the locking assembly 600 is turned to rotate to release clamping of the clamp shaft 630 and the first groove 510, then the locking assembly 600, the bearing assembly 200 and the handle assembly 100 rotate relative to the support assembly 300, until the clamp shaft 630 of the locking assembly 600 is clamped in the second groove 520 of the clamp assembly 500, so as to complete folding of the foldable scooter, and the folded scooter is shown in Fig. 12. When the scooter is needed to be unfolded, the locking assembly 600 is turned to rotate to release clamping of the clamp shaft 630 and the second groove 520, then the locking assembly 600, the bearing assembly 200, and the handle assembly 100 rotate relative to the support assembly 300 along a direction opposite to the folding direction of the scooter until the scooter is placed horizontally. The clamp shaft 630 together with the connecting plate 610 rotate around the first articulated shaft 620 relative to the bearing assembly 200, until the clamp shaft 630 is clamped in the first groove 510, so as to complete unfolding of the scooter, and the unfolded scooter is shown in Figs. 1 and 7.

Referring to Figs. 3, 5 and 6, the locking assembly 600 further includes a push-pull shaft 640 provided on the connecting plate 610. The push-pull shaft 640 is provided spaced from the clamp shaft 630. The push-pull shaft 640 is located on a side of the clamp shaft 630 away from the first articulated shaft 620. In an embodiment, when the locking assembly 600 is needed to rotate, the push-pull shaft 640 is configured to be held by hand, so as to pull or push the locking assembly 600. The push-pull shaft 640 is provided to facilitate operation of the locking assembly 600.

Referring to Figs. 3, 5 and 6, the foldable scooter further includes a second articulated shaft 700, the support assembly 300 is articulated with the bearing assembly 200 through the second articulated shaft 700. The locking assembly 600 further includes a tension spring 650. A first end of the tension spring 650 is connected to the clamp shaft 630, and a second end of the tension spring 650 is connected to the second articulated shaft. The tension spring 650 is configured to have a pretension force, to apply a pulling force to the clamp shaft 630 when clamped in the first groove 510 or the second groove 520, so as to prevent the clamp shaft 630 from being disengaged from the first groove 510 or the second groove 520. In an embodiment, when the clamp shaft 630 is clamped in the first groove 510 or the second groove 520, the tension spring 650 is configured to apply an elastic force to the clamp shaft 630, so that the clamp shaft 630 is tightly against a bottom of the first groove 510 or a bottom of the second groove 520, which ensures a clamping reliability of the clamp shaft 630 relative to the first groove 510 or the second groove 520. And the scooter is further stably maintained in the unfolded or folded state.

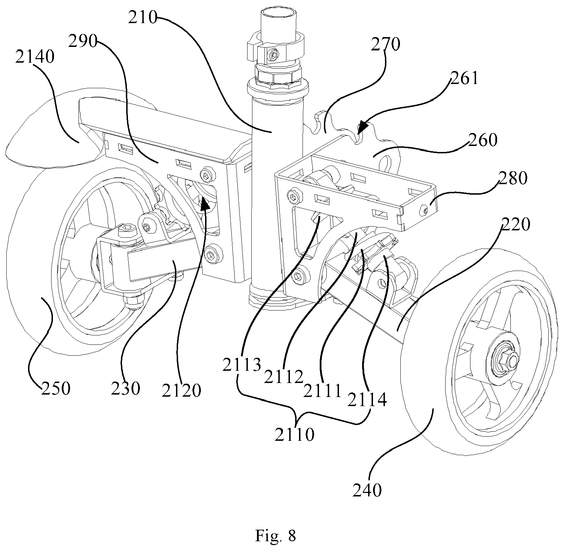

Referring to Figs. 7-8, the bearing assembly 200 includes a bearing pipe 210, a first connecting rod 220, a second connecting rod 230, a first front wheel 240, and a second front wheel 250. The first connecting rod 220 is arranged on a first side of the bearing pipe 210, and the second connecting rod 230 is arranged on a second side of the bearing pipe 210. The first front wheel 240 is rotatably provided on the first connecting rod 220, and the second front wheel 250 is rotatably provided on the second connecting rod 230.

Referring to Figs. 7-8, the bearing assembly 200 further includes a first articulated plate 260 and a second articulated plate 270. The first articulated plate 260 and the second articulated plate 270 are fixedly connected to the bearing pipe 210, and the first articulated plate 260 and the second articulated plate 270 are articulated with the support assembly 300. In an embodiment, the first articulated plate 260 and the second articulated plate 270 are articulated with the support assembly 300 through the second articulated shaft 700.

Referring to Figs. 7-8, the first articulated plate 260 and the second articulated plate 270 are respectively provided with an auxiliary groove 261. The auxiliary groove 261 is configured to hold the clamp shaft 630 of the locking assembly 600 when the locking assembly 600 is clamped in the first groove 510, so as to prevent the clamp shaft 630 form being disengaged from the first groove 510. When the scooter is unfolded, a position of the auxiliary groove 261 is in correspondence to a position of the first groove 510, and the clamp shaft 630 is clamped in the auxiliary groove 261 and the first groove 510 at the same time. In this embodiment, when the scooter is in unfolded state, the bearing assembly 200 is articulated with the support assembly 300 through the second articulated shaft 700. And the clamp shaft 630 of the locking assembly 600 is clamped in the first groove 510 of the clamp assembly 500, the auxiliary groove 261 of the first articulated plate 260, and the auxiliary groove 261 of the second articulated plate 270 at the same time. In this way, the bearing assembly 200 and the handle assembly 100 provided on the bearing assembly 200 are supported by the first articulated plate 260, the second articulated plate 270, the clamp assembly 500, and the support assembly 300 through the second articulated shaft 700 and the clamp shaft 630, that is, the second articulated shaft 700 and the clamp shaft 630 are configured as bearing shafts at the same time, so that the bearing assembly 200 and the handle assembly 100 are reliably supported.

In an embodiment, the auxiliary groove 261 is provided, so that when the scooter is in unfolded state, the clamp shaft 630 is configured to not be disengaged from the first groove 510. When the scooter is needed to be folded, the handle assembly 100 is pushed forward first, and the bearing assembly 200 is driven forward for a small distance, so that the auxiliary groove is no longer against the clamp shaft 630. Then the push-pull shaft 640 is pulled to drive the clamp shaft 630 to be disengaged from the first groove 510, so as to release the locking of the unfolded state. Then the locking assembly 600 and the bearing assembly 200 rotate relative to the support assembly 300 to allow the clamp shaft 630 to be clamped in the second groove 520, so as to realize the locking of the folded state.

In an embodiment, a size of a notch of the first groove is slightly larger than a diameter of the clamp shaft 630, so as to ensure the clamp shaft 630 to be clamped in or out of the first groove 510. Referring to Figs. 3, 5, 7 and 8, when the scooter is in the unfolded state, a front wall of the auxiliary groove 261 (a side wall of the auxiliary groove 261 close to the handle assembly) is closer to a rear wall of the first groove 510 relative to a front wall of the first groove 510 (a side wall of the first groove 510 close to the handle assembly), so that when the clamp shaft 630 is clamped in the first groove 510 and the auxiliary groove 261, the front wall of the auxiliary groove 261 and a back wall of the first groove are against a front side and a back side of the clamp shaft 630, so as to prevent the clamp shaft 630 from being disengaged from the first groove 510 and the auxiliary groove 261.

Referring to Figs. 7-8, the bearing assembly 200 further includes a first mounting frame 280, a second mounting frame 290, a first spring shock absorber 2110, and a second spring shock absorber 2120. The first mounting frame 280 is fixedly provided on the first side of the bearing pipe 210, and the second mounting frame 290 is fixedly provided on the second side of the bearing pipe 210. An end of the first connecting rod 220 away from the first front wheel 240 is rotatably connected with the first mounting frame 280, and an end of the second connecting rod 230 away from the second front wheel 250 is rotatably connected with the second mounting frame 290. The first spring shock absorber 2110 is provided between the first connecting rod 220 and the first mounting frame 280, and the second spring shock absorber 2120 is provided between the second connecting rod 230 and the second mounting frame 290. The first spring shock absorber 2110 is configured to absorb shock of the first front wheel 240, and the second spring shock absorber 2120 is configured to absorb shock of the second front wheel 250.

Referring to Figs. 7-8, the bearing assembly 200 further includes a first fender 2130 and a second fender 2140. The first fender is provided on the first mounting frame 280, and is located directly above the first front wheel 240. The second fender 2140 is provided on the second mounting frame 290, and is located directly above the second front wheel 250. In an embodiment, both the first fender 2130 and the second fender 2140 are both configured to have an arc structure with a downward protrusion in a middle, in this way, the first fender 2130 and the second fender 2140 are configured to shield a top, top of front and top of rear of the first front wheel 240 and a top, top of front and top of rear of the second front wheel 250, which has a better anti-mud effect. In addition, the first fender 2130 and the second fender 2140 are also configured for users to stretch their feet and step on, which has two functions in one thing.

Referring to Figs. 7-8, the first spring shock absorber 2110 includes a damping spring 2111, a telescopic rod 2112, a top base 2113 and a bottom base 2114. The top base 2113 is rotatably provided on the first mounting frame 280. The bottom base 2114 is rotatably provided on the first connecting rod 220. A first end of the telescopic rod 2112 is connected to the top base 2113, and a second end of the telescopic rod 2112 is configured to extend into the bottom base 2114. The telescopic rod 2112 is configured to move along its own axis to realize the extension and retraction relative to the bottom base 2114. The damping spring 2111 is sleevedly provided outside the telescopic rod 2112. A first end of the damping spring 2111 is connected to the top base 2113, and a second end of the damping spring 2111 is connected to the bottom base 2114. A rotation axis between the first connecting rod 220 and the first mounting frame 280 is parallel to a horizontal direction. In an embodiment, when encountering a bumpy road, the first front wheel 240 together with the first connecting rod 220 are configured to rotate relative to the first mounting frame 280, so that the first front wheel 240 and the first connecting rod 220 swing upward, thereby the damping spring 2111 is driven to realize retraction. At the same time, part of the telescopic rod 2112 is configured to extend into the bottom base to play a role of shock absorption through the damping spring 2111.

In this embodiment, the first spring shock absorber 2110 only includes one first connecting rod 220, and the first spring shock absorber belongs to a single connecting rod structure, while the prior art has double connecting rod structures or other more complex structures. The first spring shock absorber 2110 of this application has a simpler structure.

In an embodiment, a structure of the second spring shock absorber 2110 is the same as the structure of the first spring shock absorber 2110. A cooperative relationship of the second spring shock absorber 2120 and the second front wheel 250 is the same as a cooperative relationship of the first spring shock absorber 2110 and the first front wheel 240. A rotation axis between the second connecting rod 230 and the second mounting frame 290 is also parallel to the horizontal direction, and the second spring shock absorber 2120 is also configured to play a role of shock absorption on the second front wheel 250. In an embodiment, when encountering the bumpy road, the first front wheel 240 together with the first connecting rod 220 are configured to rotate relative to the first mounting frame 280, and the second front wheel 250 together with the second connecting 230 are configured to rotate relative to the second mounting frame 290, in this way, the first front wheel 240 and the first connecting rod 220 swing upward, and the second front wheel 250 and the second connecting rod 230 swing upward, so as to drive the damping spring 2111 to realize retraction. At the same time, part of the telescopic rod 2112 is configured to extend into the bottom base 2114 to play a role of shock absorption through the damping spring 2111.

In this embodiment, the second spring shock absorber 2120 is also configured as the single connecting rod structure which is the same as the first spring shock absorber 2110.

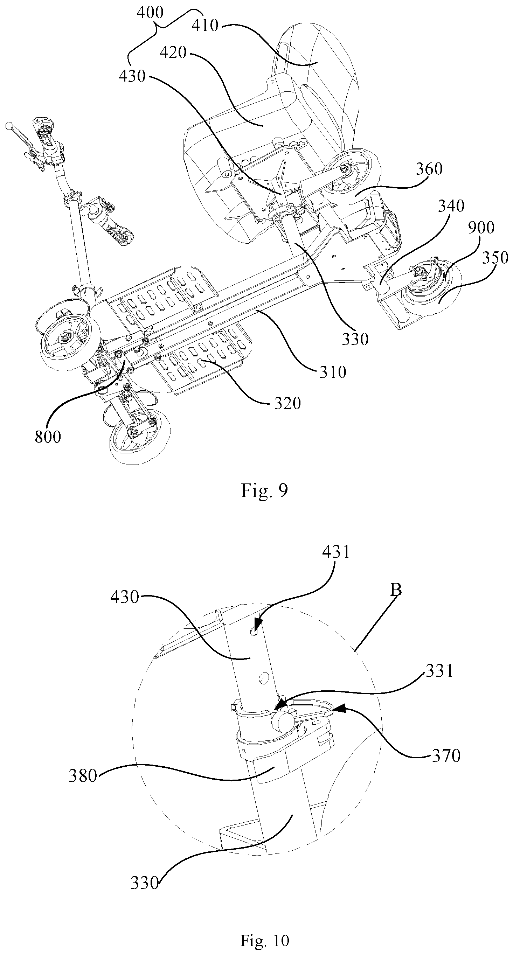

Referring to Figs. 3 and 9, the foldable scooter further includes a support plate 800. The support plate 800 is provided below the first articulated plate 260, the second articulated plate 270 and the support assembly 300, so as to limit downward rotation of the bearing assembly 200 relative to the support assembly 300. The bearing assembly 200 of the present disclosure is configured to rotate upward relative to the support assembly 300, so as to realize the folding of the foldable scooter, which has better bearing capacity and is more reliable.

Referring to Figs. 7 and 9-10, the bearing assembly 300 includes a support rod 310, a pedal 320 and a first vertical column 330. The pedal 320 and the first vertical column 330 are provided spaced apart on the support rod 310. The seat 400 is removably provided on the first vertical column 330. The support rod 310 is articulated with the bearing assembly 200, and the bearing assembly 300 is configured to rotate relative to the support assembly 300, so as to fold and unfold the foldable scooter. And the clamp assembly 500 is provided on the support rod 310. In an embodiment, the support rod 310 is articulated with the first articulated plate 260 and the second articulated plate 270 through the second articulated shaft 700.

Referring to Figs. 7 and 9-10, a number of the clamp assembly 500 is equal to a number of the support rod 310. A number of the support rod 310 is two. Two clamp assemblies 500 are in one-to-one correspondence with two support rods 310. In an embodiment, one of the two support rods 310 is articulated with the first articulated plate 260 through the second articulated shaft 700, and the other one of the two support rods 310 is articulated with the second articulated plate 270 through the second articulated shaft 700, so that an articulation of the support assembly 300 and the bearing assembly 200 is more stable and reliable. In addition, the two support rods 310 are provided as a main girder structure of the foldable scooter, so that the scooter has a better bearing capability. And the clamp shaft 630 of the locking assembly 600 is clamped in the first groove 510 and the second groove 520 of the two clamp assemblies 500 at the same time, so that articulated locking of the clamp shaft 630 is more reliable and stable.

Referring to Fig. 9, the support assembly 300 further includes a mounting part 340, a first rear wheel 350 and a second rear wheel 360. The first rear wheel 350 is rotatably provided on a first end of the mounting part 340, and the second rear wheel 360 is rotatably provided on a second end of the mounting part 340.

Referring to Figs. 7 and 9, the scooter further includes a drive part 900. The drive part 900 is connected to the first rear wheel 350. A number of the drive part 900 is one, and the drive part 900 is configured to only drive the first rear wheel 350 to rotate. In an embodiment, the drive part 900 is a hub motor. The number of the drive part 900 is one, and the drive part 900 is only configured to drive the first rear wheel 350 to rotate, therefore, this application provides the foldable scooter with single rear-wheel drive. And there is no need to worry about problems of different speeds of two rear wheels and warping of scooter with single front-wheel.

Referring to Figs. 7 and 9, the seat 400 includes a seat base 410, a seat back 420, and a second vertical column 430. The seat back 420 is rotatably provided on the seat base 410. The seat base 410 is provided on the second vertical column 430. The second vertical column 430 is removably provided on the first vertical column 330. In an embodiment, the seat back 420 is configured to rotate relative to the seat base 410, so as to fold and unfold the seat back 420 relative to the seat base 410. And when the foldable is not in use, the seat back 420 can be folded to save space.

Referring to Figs. 9-10, the support assembly 300 further includes a locking part 370, and the locking part 370 is configured to lock or unlock the second vertical column 430 relative to the first vertical column 330.

Referring to Figs. 9-11, the locking part 370 is a D-type pin. The D-type pin includes a pin shaft 371 and a U-type safety buckle 372. The pin shaft 371 is configured to pass through the first vertical column 330 and the second vertical column 430 successively. A first end of the U-type safety buckle 372 is connected to a rear end of the pin shaft 371, and a second end of the U-type safety buckle 372 is configured to pass through a front end of the pin shaft 371.

Referring to Fig. 10, the second vertical column 430 is sleevedly provided on the first vertical column 330. An outer side wall of the second vertical column 430 is provided with a plurality of adjusting holes 431 at different heights. The first vertical column 330 is provided with a locking hole 331. The pin shaft 371 can successively pass through the locking hole 331 and one of the plurality of adjusting holes 431. According to a height of the one of the plurality of adjusting holes 431 passed through by the pin shaft 371, a sleeved connection length of the first vertical column 330 and the second vertical column 430 can be adjusted and locked, so as to adjust and lock a height of the seat base 410. In this embodiment, the seat 400 is needed to bear a weight of a user. Through the pin shaft 371 successively passing through the locking hole 331 and the one of the plurality of adjusting holes 431, the second vertical column 430 can be prevented from sliding downward relative to the first vertical column 330 under the action of the weight of the user.

Referring to Fig. 10, the second vertical column 430 is sleeved provided in the first vertical column 330. The support assembly 300 further includes a first fastening part 380. The first fastening part 380 is provided on the first vertical column 330, and is configured to fasten the first vertical column 330, thereby the second vertical column 430 is fastened by the first vertical column 330, so that the second vertical column 430 is prevented from shaking relative to the first vertical column 330.

Referring to Figs. 1 and 7, the handle assembly 100 includes a telescopic assembly 110 and a handle 120. The telescopic assembly 110 is provided on the bearing assembly 200. The handle 120 is provided on the telescopic assembly 110. The telescopic assembly 110 is configured to realize extension and retraction along its own axis, so as to adjust a height of the handle 120.

Referring to Fig. 7, the telescopic assembly 110 includes a first connecting pipe 111 and a second connecting pipe 112. The first connecting pipe 111 is sleevedly connected with the second connecting pipe 112. An end of the first connecting pipe 111 away from the second connecting pipe 112 is provided on the bearing assembly 200. The handle is provided on an end of the second connecting pipe 112 away from the first connecting pipe 111. The second connecting pipe 112 is configured to rise and fall along its own axis to adjust a sleeve length of the second connecting pipe 112 relative to the first connecting pipe 111, so as to adjust the height of the handle 120.

Referring to Fig. 7, the telescopic assembly 110 includes a second fastening part 113. The second fastening part 113 is provided on the first connecting pipe 111, and is configured to fasten the first connecting pipe 111, so that the second connecting pipe 112 is fastened by the first connecting pipe 111 to realize a location of the second connecting pipe 112 relative to the first connecting pipe 111.

Referring to Fig. 1, the foldable scooter further includes a lithium battery 1000. The lithium battery 1000 is configured to supply power to the foldable scooter.

Described above are only preferred embodiments of this application, and are not intended to limit the scope of this application. It should be understood that any variations, modifications and equivalent replacements made by those skilled in the art without departing from the spirit of this application shall fall within the scope of this application defined by the appended claims.

## Claims

1. A foldable scooter, comprising:
a handle assembly;
a bearing assembly;
a support assembly;
a seat;
a clamp assembly; and
a locking assembly;
**characterized in that** the handle assembly is provided on the bearing assembly; the support assembly is articulated with the bearing assembly, and the bearing assembly is configured to be rotatable relative to the support assembly to fold or unfold the scooter; the seat is removably provided on the support assembly; the clamp assembly is provided on the support assembly, and is provided with a first groove and a second groove spaced from the first groove; the locking assembly is rotatably provided on the bearing assembly, and the locking assembly is configured to rotate relative to the bearing assembly to be clamped in the first groove, so as to realize locking of the scooter in an unfolded state; and the locking assembly is also configured to rotate together with the bearing assembly relative to the support assembly, so that the locking assembly is clamped in the second groove to realize locking of the scooter in a folded state.

2. The foldable scooter according to claim 1, **characterized in that** the locking assembly comprises a connecting plate, a first articulated shaft and a clamp shaft; the first articulated shaft and the clamp shaft are provided spaced apart on the connecting plate; the first articulated shaft is rotatably provided on the bearing assembly; the clamp shaft and the connecting plate are configured to rotate around the first articulated shaft relative to the bearing assembly, so as to allow the clamp shaft to be clamped in the first groove; and the locking assembly is configured to rotate together with the bearing assembly relative to the support assembly, so as to allow the clamp shaft to be clamped in the second groove.

3. The foldable scooter according to claim 2, **characterized in that** the locking assembly further comprises a push-pull shaft; the push-pull shaft is provided on the connecting plate, and is spaced from the clamp shaft; and the push-pull shaft is located on a side of the clamp shaft away from the first articulated shaft.

4. The foldable scooter according to claim 2, further comprising:
a second articulated shaft;
wherein the support assembly is articulated with the bearing assembly through the second articulated shaft; the locking assembly further comprises a tension spring; a first end of the tension spring is connected to the clamp shaft, and a second end of the tension spring is connected to the second articulated shaft; the tension spring is configured to have a pretension force to apply a pulling force to the clamp shaft when clamped in the first groove or the second groove, so as to prevent the clamp shaft from being disengaged from the first groove or the second groove.

5. The foldable scooter according to claim 1, **characterized in that** the bearing assembly comprises a bearing pipe, a first connecting rod, a second connecting rod, a first front wheel and a second front wheel; the first connecting rod is arranged on a first side of the bearing pipe, and the second connecting rod is arranged on a second side of the bearing pipe; the first front wheel is rotatably provided on the first connecting rod, and the second front wheel is rotatably provided on the second connecting rod; the bearing assembly further comprises a first articulated plate and a second articulated plate; the first articulated plate and the second articulated plate are fixedly connected to the bearing pipe; and the first articulated plate and the second articulated plate are articulated with the support assembly.

6. The foldable scooter according to claim 5, **characterized in that** the bearing assembly further comprises a first mounting frame, a second mounting frame, a first spring shock absorber, and a second shock absorber; the first mounting frame is fixedly provided on the first side of the bearing pipe, and the second mounting frame is fixedly provided on the second side of the bearing pipe; an end of the first connecting rod away from the first front wheel is rotatably connected with the first mounting frame, and an end of the second connecting rod away from the second front wheel is rotatably connected with the second mounting frame; the first spring shock absorber is provided between the first connecting rod and the first mounting frame, and the second spring shock absorber is provided between the second connecting rod and the second mounting frame; the first spring shock absorber is configured to absorb shock of the first front wheel, and the second spring shock absorber is configured to absorb shock of the second front wheel.

7. The foldable scooter according to claim 6, **characterized in that** the first spring shock absorber comprises a damping spring, a telescopic rod, a top base and a bottom base; the top base is rotatably provided on the first mounting frame; the bottom base is rotatably provided on the first connecting rod; a first end of the telescopic rod is connected to the top base, and a second end of the telescopic rod is configured to extend into the bottom base; the telescopic rod is configured to move along its own axis to realize extension and retraction relative to the bottom base; the damping spring is sleevedly provided outside the telescopic rod; a first end of the damping spring is connected to the top base, and a second end of the damping spring is connected to the bottom base; a rotation axis between the first connecting rod and the first mounting frame is parallel to a horizontal direction.

8. The foldable scooter according to claim 1, **characterized in that** the support assembly comprises a support rod, a pedal, and a first vertical column; the pedal and the first vertical column are provided spaced apart on the support rod; the seat is removably provided on the first vertical column; the support rod is articulated with the bearing assembly, and the bearing assembly is configured to rotate relative to the support assembly, so as to fold or unfold the scooter; and the clamp assembly is provided on the support rod.

9. The foldable scooter according to claim 8, **characterized in that** the number of the clamp assembly is equal to the number of the support rod, and the clamp assembly is in one-to-one correspondence with the support rod; and the number of the support rod is two.

10. The foldable scooter according to claim 5, further comprising:
a support plate;
wherein the support plate is provided below the first articulated plate, the second articulated plate, and the support assembly, so as to limit downward rotation of the bearing assembly relative to the support assembly.

11. The foldable scooter according to claim 5, **characterized in that** the support assembly comprises a mounting part, a first rear wheel and a second rear wheel; the first rear wheel is rotatably provided on a first end of the mounting part, and the second rear wheel is rotatably provided on a second end of the mounting part.

12. The foldable scooter according to claim 1, **characterized in that** the handle assembly comprises a telescopic assembly and a handle; the telescopic assembly is provided on the bearing assembly; the handle is provided on the telescopic assembly; and the telescopic assembly is configured to be extendable and retractable along its own axis, so as to adjust a height of the handle.

13. The foldable scooter according to claim 11, further comprising:
a drive part;
wherein the drive part is connected to the first rear wheel; the number of the drive part is one, and the drive part is configured to only drive the first rear wheel to rotate.

## Amended claims

### Amended claims in accordance with Rule 137(2) EPC.

1. A foldable scooter, comprising:
a handle assembly (100);
a bearing assembly (200);
a support assembly (300);
a seat (400);
a clamp assembly (500); and
a locking assembly (600);
the handle assembly (100) is provided on the bearing assembly (200); the support assembly (300) is articulated with the bearing assembly (200), and the bearing assembly (200) is configured to be rotatable relative to the support assembly (300) to fold or unfold the scooter; the seat (400) is removably provided on the support assembly (300); the clamp assembly (500) is provided on the support assembly (300), and is provided with a first groove (510) and a second groove (520) spaced from the first groove (510); the locking assembly (600) is rotatably provided on the bearing assembly (200), and the locking assembly (600) is configured to rotate relative to the bearing assembly (200) to be clamped in the first groove (510), so as to realize locking of the scooter in an unfolded state; and the locking assembly (600) is also configured to rotate together with the bearing assembly (200) relative to the support assembly (300), so that the locking assembly (600) is clamped in the second groove (520) to realize locking of the scooter in a folded state;
the bearing assembly (200) comprises a bearing pipe (210), a first connecting rod (220), a second connecting rod (230), a first front wheel (240) and a second front wheel (250); the first connecting rod (220) is arranged on a first side of the bearing pipe (210), and the second connecting rod (230) is arranged on a second side of the bearing pipe (210); the first front wheel (240) is rotatably provided on the first connecting rod (220), and the second front wheel (250) is rotatably provided on the second connecting rod (230); the bearing assembly (200) further comprises a first articulated plate (260) and a second articulated plate (270); the first articulated plate (260) and the second articulated plate (270) are fixedly connected to the bearing pipe (210); and the first articulated plate (260) and the second articulated plate (270) are articulated with the support assembly (300); .
**characterized in that** the bearing assembly (200) further comprises a first mounting frame (280), a second mounting frame (290), a first spring shock absorber (2110), and a second shock absorber (2120); the first mounting frame (280) is fixedly provided on the first side of the bearing pipe (210), and the second mounting frame (290) is fixedly provided on the second side of the bearing pipe (210); an end of the first connecting rod (220) away from the first front wheel (240) is rotatably connected with the first mounting frame (280), and an end of the second connecting rod (230) away from the second front wheel (250) is rotatably connected with the second mounting frame (290); the first spring shock absorber (2110) is provided between the first connecting rod (220) and the first mounting frame (280), and the second spring shock absorber (2120) is provided between the second connecting rod (230) and the second mounting frame (290); the first spring shock absorber (2110) is configured to absorb shock of the first front wheel (240), and the second spring shock absorber (2120) is configured to absorb shock of the second front wheel (250); and
the first spring shock absorber (2110) comprises a damping spring (2111), a telescopic rod (2112), a top base (2113) and a bottom base (2114); the top base (2113) is rotatably provided on the first mounting frame (280); the bottom base (2114) is rotatably provided on the first connecting rod (220); a first end of the telescopic rod (2112) is connected to the top base (2113), and a second end of the telescopic rod (2112) is configured to extend into the bottom base (2114); the telescopic rod (2112) is configured to move along its own axis to realize extension and retraction relative to the bottom base (2114); the damping spring (2111) is sleevedly provided outside the telescopic rod (2112); a first end of the damping spring (2111) is connected to the top base (2113), and a second end of the damping spring (2111) is connected to the bottom base (2114); a rotation axis between the first connecting rod (220) and the first mounting frame (280) is parallel to a horizontal direction.

2. The foldable scooter according to claim 1, **characterized in that** the locking assembly (600) comprises a connecting plate (610), a first articulated shaft (620) and a clamp shaft (630); the first articulated shaft (620) and the clamp shaft (630) are provided spaced apart on the connecting plate (610); the first articulated shaft (620) is rotatably provided on the bearing assembly (200); the clamp shaft (630) and the connecting plate (610) are configured to rotate around the first articulated shaft (620) relative to the bearing assembly (200), so as to allow the clamp shaft (630) to be clamped in the first groove (510); and the locking assembly (600) is configured to rotate together with the bearing assembly (200) relative to the support assembly (300), so as to allow the clamp shaft (630) to be clamped in the second groove (520).

3. The foldable scooter according to claim 2, **characterized in that** the locking assembly (600) further comprises a push-pull shaft (640); the push-pull shaft (640) is provided on the connecting plate (610), and is spaced from the clamp shaft (630); and the push-pull shaft (640) is located on a side of the clamp shaft (630) away from the first articulated shaft (620).

4. The foldable scooter according to claim 2, further comprising:
a second articulated shaft (700);
wherein the support assembly (300) is articulated with the bearing assembly (200) through the second articulated shaft (700); the locking assembly (600) further comprises a tension spring (650); a first end of the tension spring (650) is connected to the clamp shaft (630), and a second end of the tension spring (650) is connected to the second articulated shaft (700); the tension spring (650) is configured to have a pretension force to apply a pulling force to the clamp shaft (630) when clamped in the first groove (510) or the second groove (520), so as to prevent the clamp shaft (630) from being disengaged from the first groove (510) or the second groove (520).

5. The foldable scooter according to claim 1, **characterized in that** the support assembly (300) comprises a support rod (310), a pedal (320), and a first vertical column (330); the pedal (320) and the first vertical column (330) are provided spaced apart on the support rod (310); the seat is removably provided on the first vertical column (330); the support rod (310) is articulated with the bearing assembly (200), and the bearing assembly (200) is configured to rotate relative to the support assembly (300), so as to fold or unfold the scooter; and the clamp assembly (500) is provided on the support rod (310).

6. The foldable scooter according to claim 5, **characterized in that** the number of the clamp assembly (500) is equal to the number of the support rod (310), and the clamp assembly (500) is in one-to-one correspondence with the support rod (310); and the number of the support rod (310) is two.

7. The foldable scooter according to claim 1, further comprising:
a support plate (800);
wherein the support plate (800) is provided below the first articulated plate (260), the second articulated plate (270), and the support assembly (300), so as to limit downward rotation of the bearing assembly (200) relative to the support assembly (300).

8. The foldable scooter according to claim 1, **characterized in that** the support assembly (300) comprises a mounting part (340), a first rear wheel (350) and a second rear wheel (360); the first rear wheel (350) is rotatably provided on a first end of the mounting part (340), and the second rear wheel (360) is rotatably provided on a second end of the mounting part (340).

9. The foldable scooter according to claim 1, **characterized in that** the handle assembly (100) comprises a telescopic assembly (110) and a handle (120); the telescopic assembly (110) is provided on the bearing assembly (200); the handle (120) is provided on the telescopic assembly (110); and the telescopic assembly (110) is configured to be extendable and retractable along its own axis, so as to adjust a height of the handle (120).

10. The foldable scooter according to claim 8, further comprising:
a drive part (900);
wherein the drive part (900) is connected to the first rear wheel (350); the number of the drive part (900) is one, and the drive part (900) is configured to only drive the first rear wheel (350) to rotate.
